# EUROPEAN PATENT APPLICATION

(11) **EP 1 727 299 A1**
(43) Date of publication of application: **29.11.2006**
(21) Application number: 04821740.0
(22) Date of filing: 06.12.2004
(51) Int. Cl.: H04B 7/26

(54) **RADIO BASE STATION APPARATUS TEMPORARILY HOLDING RECEIVED SIGNALS IN BUFFER**

(30) Priority: 19.03.2004 JP 2004080371
(71) Applicant: NEC CORPORATION, Minato-ku, Tokyo 108-8001 (JP)
(72) Inventor: KONDO, Takayuki, Minato-ku, Tokyo 1088001 (JP)
(74) Representative: Wenzel & Kalkoff
(86) International application number: PCT/JP2004/018121
(87) International publication number: WO 2005/091530

(57) **Abstract**

A radio base station is disclosed for efficiently utilizing resources by holding a call not in a diversity hand-over state once in a data buffer in a radio communications system having a diversity hand-over function. A shared resource unit has a processing device, as a shared resource, for processing the signal of each call. A buffer unit sends a received signal to the processing device of the shared resource unit, when the received signal is a signal of a call in a diversity hand-over state, such that it can be transmitted at a predetermined time. On the other hand, when the received signal is a signal of a call which is not in a diversity hand-over state, the buffer unit holds the received signal in a data buffer, and subsequently sends the received signal to the processing device at a time at which the processing device becomes available.

## Description

### TECHNICAL FIELD

The present invention relates to a radio base station for a mobile communications system, and more particularly, to a radio base station for a mobile communications system which has a diversity hand-over function.

### BACKGROUND ART

In mobile communications systems, packet communications have increasingly occupied a larger percentage of traffic, in addition to conventional voice calls. For this reason, it is important to maintain good communication quality for packet communications and to increase the throughput of packet communications to improve the efficiency in mobile communications systems. Accordingly, a variety of techniques have been proposed therefor (see, for example, JP-A-2002-223467 and JP-A-2002-281545).

Also, in a CDMA mobile communications system, mobile stations have a function of diversity hand-over for transmitting/receiving the same signal to/from a plurality of radio base stations in order to maintain good communication quality for voice calls, packet communications and the like. In this type of CDMA mobile communications system, a selection is made based on the communication situation and the like, regardless of whether or not the diversity hand-over should be applied on a call-by-call basis.

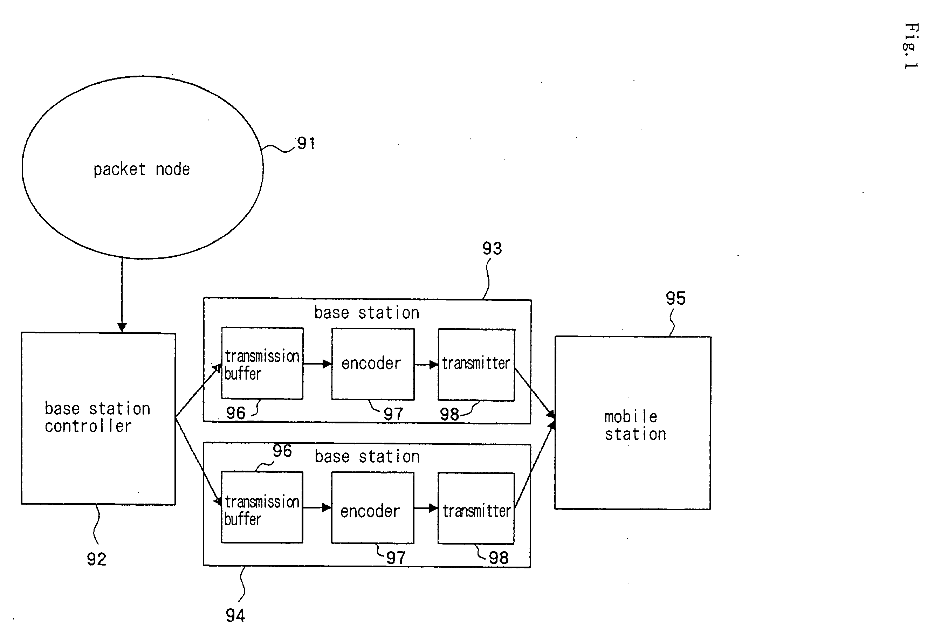

Fig. 1 is a diagram illustrating a situation of diversity hand-over in a conventional CDMA mobile communications system. In Fig. 1, the CDMA mobile communications system comprises packet node 91, base station controller 92, radio base stations 93, 94, and mobile station 95. Mobile station 95 is in communication, and its call undergoes diversity hand-over using radio base station 93 and radio base station 94.

Focusing on a downlink signal from the radio base stations to the mobile station, mobile station 95 receives both a signal from radio base station 93 and a signal from radio base station 94. Mobile station 95 combines these signals to maintain good communication quality.

For combining these signals in mobile station 95, radio base station 93 must match radio base station 94 in transmission timing. Thus, base station controller 92 specifies the timing at which packets are transmitted for radio base stations 93, 94 using a frame number. Radio base stations 93, 94 transmit the same packets at the same timing based on the frame number specified by base station controller 92.

According to the configuration of radio base stations 93, 94 illustrated in Fig. 1, packets from base station controller 93 are temporarily accumulated in transmission buffer 96, the output of which is encoded by encoder 97, whose output is transmitted to mobile station 95 by transmitter 98 at a predetermined timing.

### DISCLOSURE OF THE INVENTION

Unlike voice communication and the like which require a real time nature, packet communication is characterized in that a delay is allowed in the transmission of packets within a communications system. When resources are efficiently shared by a plurality of calls by adjusting the packet transmission timing of each call, the efficiency of packet communication can be improved in the system.

However, as described above, in the CDMA mobile communications system, the base station controller specifies a timing at which packets are transmitted from the radio base stations to the mobile station in order to realize a diversity hand-over function. For this reason, packet transmission timing cannot be adjusted, thereby failing to efficiently utilize resources.

It is an object of the present invention to provide a radio base station which is capable of efficiently utilizing resources in a radio communications system which has a diversity hand-over function.

To achieve the above object, a radio base station apparatus of the present invention is a radio base station apparatus for transmitting/receiving a signal to/from a mobile station over the air in a radio communications system having a diversity hand-over function, and has a shared resource unit and a buffer unit.

The shared resource unit has a processing device, as a shared resource, for processing a signal of each call.

The buffer unit sends the received signal to the processing device of the shared resource unit, when the received signal is a signal of a call which is in a diversity hand-over state, such that it can be transmitted at a predetermined time. On the other hand, when the received signal is a signal of a call which is not in a diversity hand-over state, the buffer unit holds the received signal once in a data buffer, and subsequently sends it to the processing means at a time at which the processing means becomes available.

According to the present invention, at a time at which the processing means, which is a shared resource of the shared resource unit, is not available, a signal of a call not subjected to diversity hand-over is held in the data buffer of the buffer unit, and processed for transmission at a time at which the processing means becomes available, using the processing means, so that the processing means can be efficiently utilized as a shared resource in the radio communications system having the diversity hand-over function.

### BRIEF DESCRIPTION OF THE DRAWINGS

[Fig. 1] A diagram illustrating a situation of diversity hand-over in a conventional CDMA mobile communications system.
[Fig. 2] A block diagram illustrating the configuration of a CDMA mobile communications system according to one embodiment of the present invention.
[Fig. 3] A detailed block diagram of a radio base station illustrated in Fig. 2.
[Fig. 4] A flow chart illustrating the operation of the radio base station in this embodiment.
[Fig. 5] A first diagram illustrating a specific example of the operation of the radio base station in this embodiment.
[Fig. 6] A second diagram illustrating a specific example of the operation of the radio base station in this embodiment.
[Fig. 7] A block diagram illustrating the configuration of a CDMA mobile communications system according to another embodiment.
[Fig. 8] A detailed block diagram illustrating a radio base station illustrated in Fig. 7.
[Fig. 9] A first diagram illustrating a specific example of the operation of the radio base station illustrated in Fig. 7.
[Fig. 10] A second diagram illustrating a specific example of the operation of the radio base station illustrated in Fig. 7.

### BEST MODE FOR CARRYING OUT THE INVENTION

One embodiment of the present invention will be described in detail with reference to the drawings.

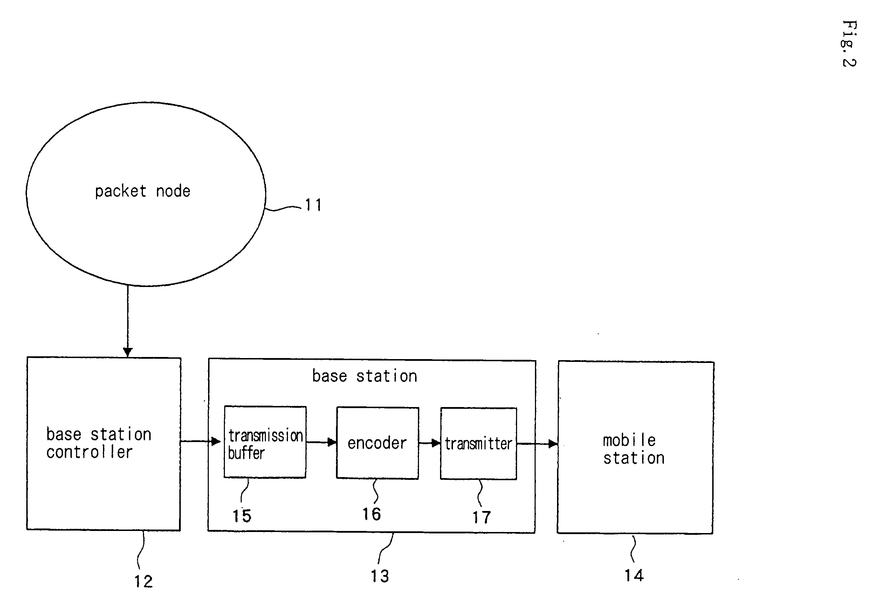

Fig. 2 is a block diagram illustrating the configuration of a CDMA mobile communications system according to one embodiment of the present invention. Referring to Fig. 2, the CDMA mobile communications system comprises packet node 11, base station controller 12, radio base station 13, and mobile station 14. While Fig. 2 illustrates an example which includes one each of the respective devices, a plurality of the respective devices exists in general.

Packet node 11 is a node which accumulates and exchanges packets transmitted/received by mobile station 14 in order to enable packet communications in the CDMA mobile communications system.

Base station controller 12 is a controller for making a variety of settings and for controlling control for radio base station 13. Also, for a main signal system, base station controller 12 relays packet data between packet node 11 and radio base station 13. For packet data of a call which is in a diversity hand-over state, base station controller 12 transmits/receives the same packets to/from a plurality of radio base stations 13, and also combines them. Base station controller 12 further specifies a timing at which packet data is transmitted from radio base station 13 to mobile station 14 using a frame number in order that signals of diversity hand-over can be combined in mobile station 14.

Radio base station 13 is mutually connected with mobile station 14 over the air to transmit/receive packet data. A timing at which the packet data is transmitted to mobile station 14 is specified by base station controller 12. However, radio base station 13 monitors encoder unit 16 for its availability to adjust the packet transmission timing for packets of a packet communication call which is not in the diversity hand-over state.

For this purpose, radio base station 13 comprises transmission buffer unit 15, encoder unit 16, and transmission unit 17. Transmission buffer unit 15 temporarily accumulates packets from base station controller 12 to adjust a transmission timing. Encoder unit 16 encodes packets supplied from transmission buffer 15. Transmission unit 17 transmits the packets encoded by encoder unit 16 to mobile station 12.

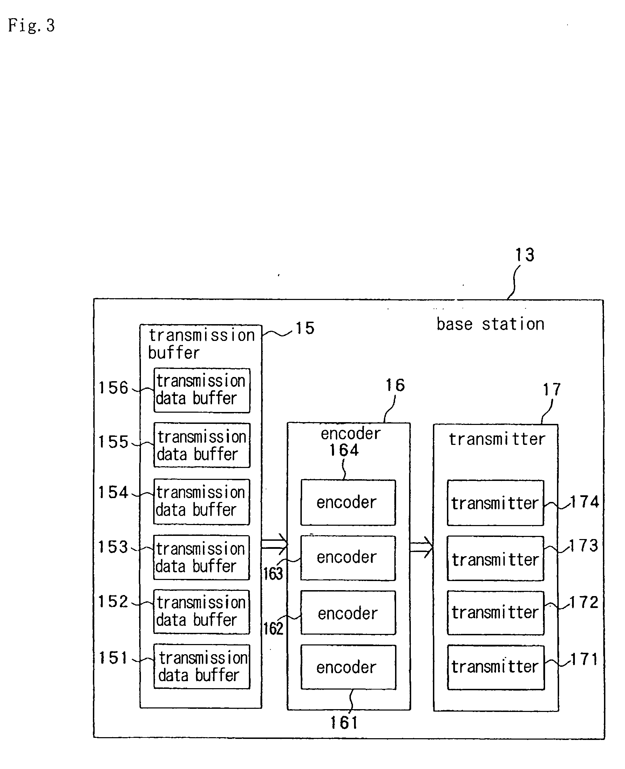

Fig. 3 is a detailed block diagram of the radio base station illustrated in Fig. 2. Referring to Fig. 3, transmission buffer 15 has transmission data buffers 151 - 156. Encoder unit 16 has encoders 161 - 164. Transmission unit 17 has transmitters 171 - 174.

Transmission data buffers 151 - 157 are each assigned to each connected call while encoders 161 - 164 can be shared by a plurality of calls. For this reason, there are a larger number of transmission data buffers 151 - 156 than encoders 161 - 164. As can be appreciated, the number of each component shown in Fig. 3 is just an example.

Mobile station 14 is mutually connected with radio base station 13 over the air to transmit/receive packets. For a call which is in a diversity hand-over state, mobile station 14 combines signals received from a plurality of radio base stations.

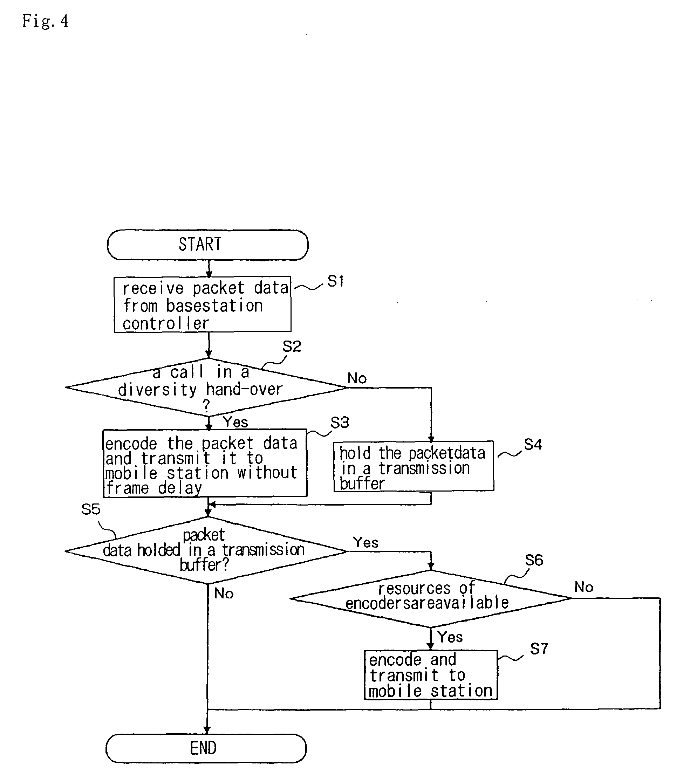

Fig. 4 is a flow chart illustrating the operation of the radio base station of this embodiment. Referring to Fig. 4, upon receipt of packet data, which should be transmitted at a predetermined time from base station controller 12 (step S1), radio base station 13 determines whether or not the packet data is associated with a call which is in a diversity hand-over state (step S2).

If the packet data is associated with a call in the diversity hand-over state, radio base station 13 encodes the packet data at a time specified by the frame number from base station controller 12 for transmission to mobile station 14 (step S3). In this event, the packet data is generally transmitted without frame delay.

On the other hand, if the packet data is not associated with a call in the diversity hand-over state, radio base station 13 holds the packet data in a transmission data buffer which is assigned to the call (step S4).

After processing at step S3 or S4, radio base station 13 determines whether or not packet data has been held in any transmission data buffer (step S5). If no packet data is held in any transmission buffer, radio base station 13 terminates the packet transmission processing as it is.

On the other hand, if packet data is held in any of the transmission data buffers, radio base station 13 determines whether or not the resources of encoders are available (step S6). If there is an available encoder, radio base station 13 transmits the packet data held in the transmission buffer to mobile station 14 using that encoder (step S7). On the other hand, if there is no encoder available, radio base station 13 terminates the processing while the packet data is held in the transmission buffer, and waits for the next timing.

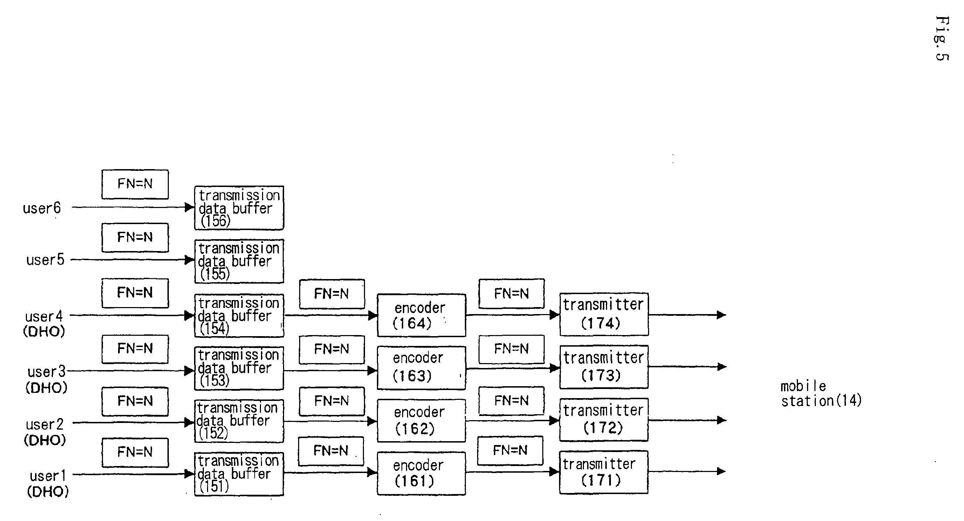

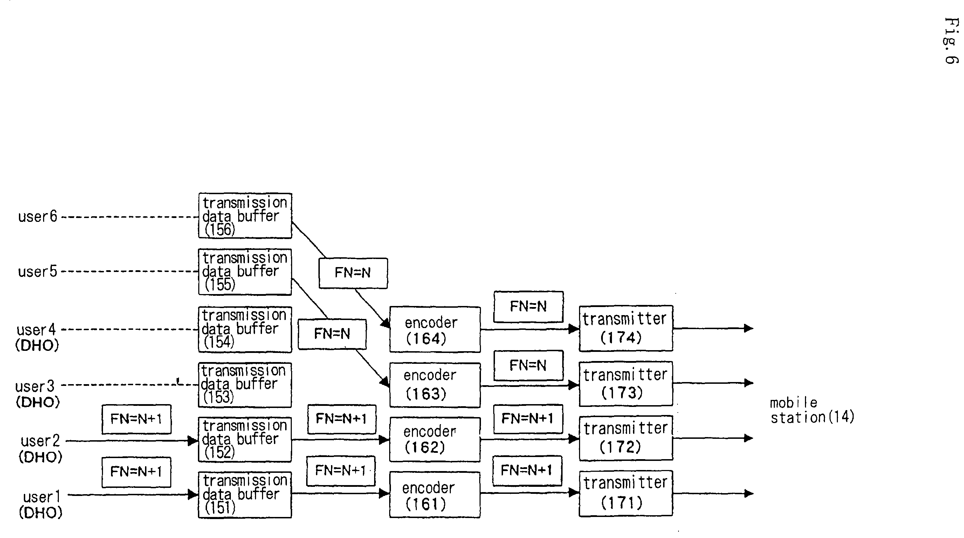

Figs. 5, 6 are diagrams illustrating a specific example of the operation of the radio base station in this embodiment.

Referring first to Fig. 5, calls of users 1 - 6 have been set in radio base station 13. Among them, users 1 - 4 are in a diversity hand-over state, while users 5, 6 are not in a diversity hand-over state.

Assume herein that radio base station 13 has received packet data with specified frame number FN=N from base station controller 12, not shown, for all the calls of users 1 - 6. Then, radio base station 13 encodes the packet data of users 1 - 4, that are in a diversity hand-over state, in encoders 161 - 164 through transmission data buffers 151 - 154 for transmission from transmitters 171 - 174 to each mobile station 14 without frame delay. On the other hand, packet data of users 5, 6 that are not in a diversity hand-over state are held in transmission data buffers 155, 156.

Referring next to Fig. 6, assume that radio base station 13 has received packet data with specified frame number FN=N+1 from base station controller 12, not shown, for calls of users 1, 2. Then, radio base station 13 encodes the packet data of users 1, 2 in encoders 161, 162 through transmission data buffers 151, 152 for transmission from transmitters 171, 172 to each mobile station 14 without frame delay. Also, since the packet data with FN=N are held in transmission data buffers 155, 156, radio base station 13 encodes the packet data using available encoders 163, 164 for transmission to each mobile station 14 from transmitters 173, 174.

As described above, at a time at which no encoder is available in encoders 161 - 164, which are shared resources of encoder unit 16, packet data of a packet communication which is not subjected to the diversity hand-over is held in the transmission buffer of transmission buffer unit 15, and is encoded at a time at which any encoder becomes available, using this available encoder and is transmitted from a transmitter of transmission unit 17, so that the encoders can be efficiently utilized, an increased number of calls can be accommodated, and the throughput of the packet communication can be improved, without increasing the number of encoders, in the CDMA mobile communications system having the diversity hand-over function.

Also, radio base station 13 in this embodiment improves the efficiency of utilizing the encoders by adjusting the packet data transmission timing for a packet communication which allows a delay, so that the user will not feel inconvenience due to delayed packets.

While an example of efficiently processing a downlink signal has been shown as an embodiment of the present invention, the present invention is not limited thereto, but an uplink signal can also be efficiently processed in a similar manner. Also, the present invention may be simultaneously applied to both the uplink signal and downlink signal.

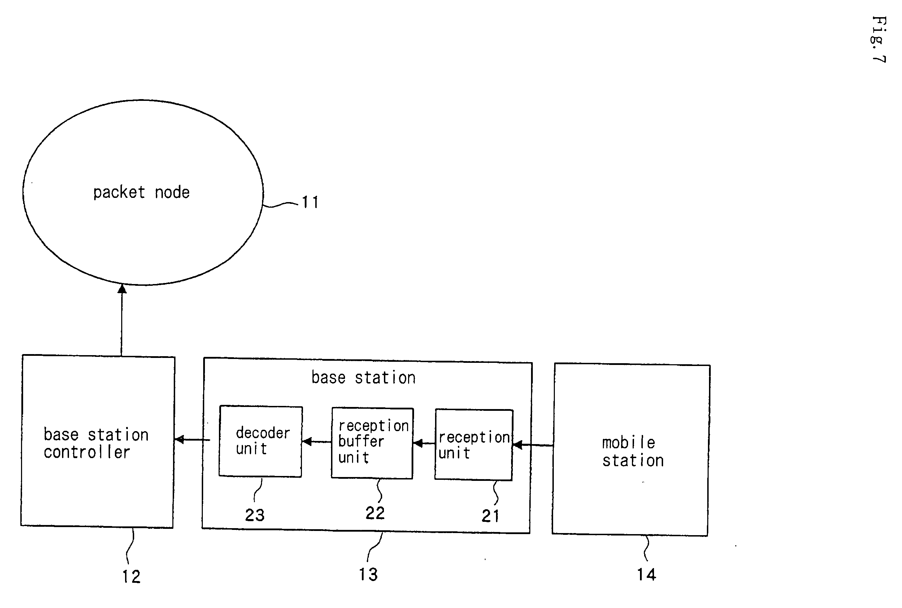

Another embodiment of the present invention will be described. The other embodiment is an example in which the present invention is applied to an uplink signal. Fig. 7 is a block diagram illustrating a CDMA mobile communications system according to the other embodiment. Referring to Fig. 7, the CDMA mobile communications system comprises packet node 11, base station controller 12, radio base station 13, and mobile station 14, as shown in Fig. 2.

For a call which is in a diversity hand-over state, mobile station 14 transmits packets to a plurality of radio base stations 13. Each radio base station 13 decodes the packet data for transmission to base station controller 12. Base station controller 12 combines signals of the packet data from a plurality of radio base stations 13 for transmission to packet node 11.

Accordingly, radio base station 13 differs from that of Fig. 2 in that it comprises reception unit 21, reception buffer unit 22, and decoder unit 23. Reception unit 21 receives packet data from each mobile station 14. Reception buffer unit 22 temporarily accumulates packet data received by reception unit 21 to adjust a timing for transmission to base station controller 12. Decoder unit 23 decodes packet data supplied from reception buffer unit 22 for transmission to base station controller 12.

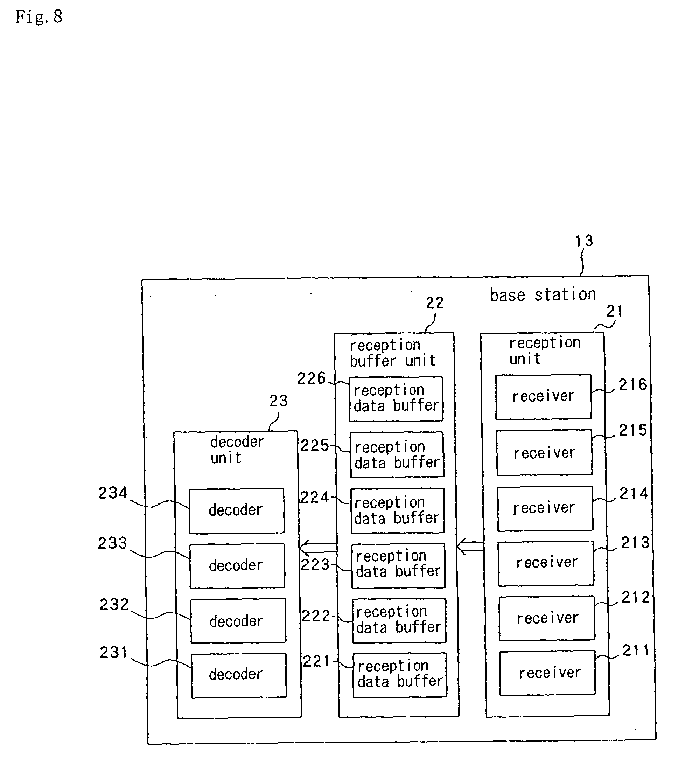

Fig. 8 is a detailed block diagram of the radio base station illustrated in Fig. 7. Referring to Fig. 8, reception unit 21 of radio base station 13 has receivers 211 - 216. Reception buffer unit 22 has reception data buffers 221 - 226. Decoder unit 23 has decoders 231 - 234.

Reception data buffer 221 - 226 are each assigned to each connected call, whereas decoders 231 - 234 can be shared by a plurality of calls. For this reason, there are a larger number of reception data buffers 221 - 226 than decoders 231 - 234. As can be appreciated, the number of each component shown in Fig. 8 is just an example.

Next, a description will be given of the operation of radio base station 13 of this embodiment.

If packet data received from each mobile station 14 is associated with a call in a diversity hand-over state, radio base station 13 decodes the packet data at a predetermined time for transmission to base station controller 12. Generally, the packet data is transmitted without frame delay. This predetermined time is determined such that the same packet data transmitted from the same mobile station 14 are received by base station controller 12 at the same time asfrom a plurality of radio base stations 13 which are involved in the diversity hand-over.

On the other hand, for packet data associated with a call which is not in a diversity hand-over state, radio base station 13 holds the packet data in a reception data buffer assigned to the call, and decodes the packet data at a time at which any decoder becomes available, using this available decoder, for transmission to base station controller 12.

Figs, 9, 10 are diagrams illustrating specific examples of the operation of the base station apparatus in this embodiment.

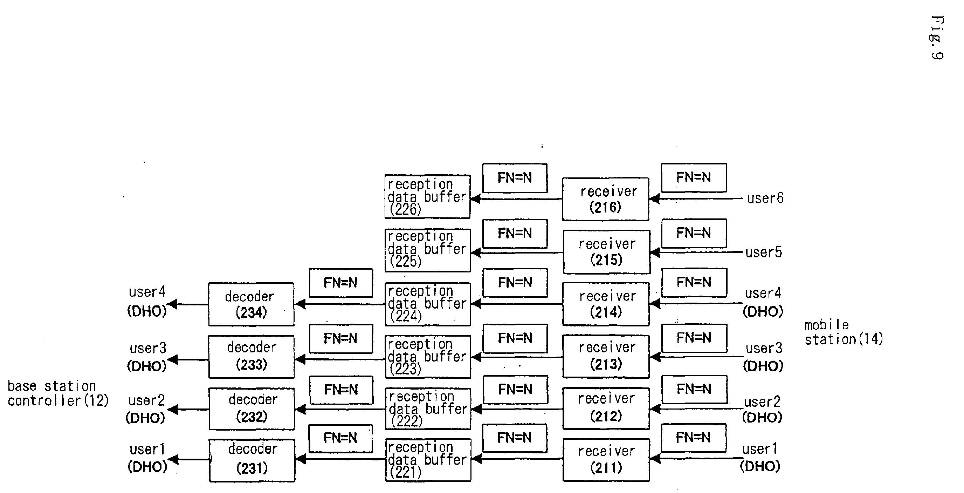

Referring first to Fig. 9, calls of users 1 - 6 have been set in this radio base station 13. Among them, users 1 - 4 are in a diversity hand-over state, while users 5, 6 are not in a diversity hand-over state.

Assume herein that radio base station 13 has received packet data with specified frame number FN=N from each mobile station 14, not shown, for all the calls of users 1 - 6. Then, radio base station 13 receives packet data of users 1 - 4 in a diversity hand-over state by receivers 211 - 214, and decodes them in decoders 231, 232 through reception data buffers 221, 222 for transmission to base station controller 12 without frame delay. On the other hand, the packet data of users 5, 6, not in a diversity hand-over state, are held in reception data buffers 225, 226.

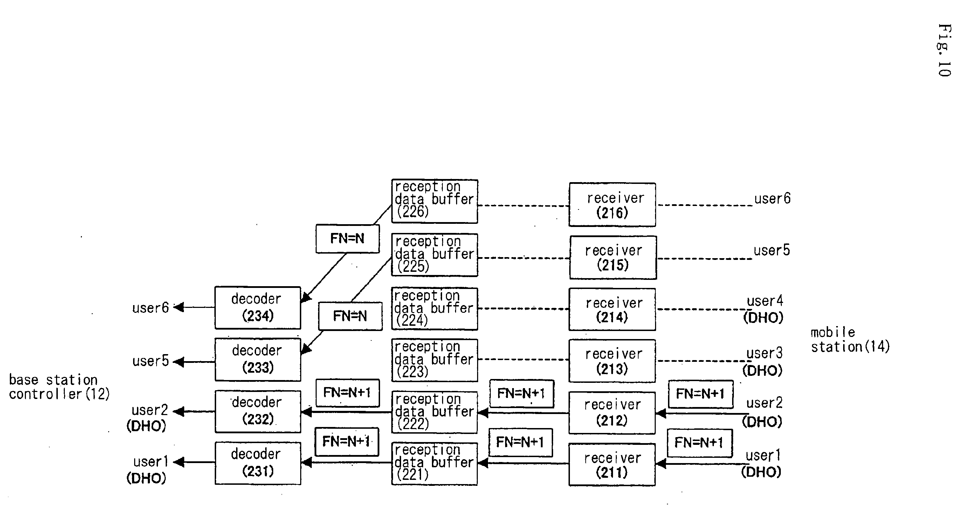

Referring next to Fig. 10, assume that radio base station 13 has received packet data with specified frame number FN=N+1 from each mobile station 14, not shown, for the calls of users 1, 2. Then, radio base station 13 receives the packet data of users 1, 2 by receivers 211, 212, and decodes them in decoders 231, 232 through reception data buffers 221, 222 for transmission to base station controller 12 without frame delay. Also, since data packets with FN=N are held in reception data buffers 225, 226, radio base station 13 decodes the packet data using available decoders 233, 234 for transmission to base station controller 12.

As described above, the radio base station of this embodiment holds packet data of a packet communication which is not subjected to diversity hand-over in the reception buffer of reception buffer unit 22 at a time at which no decoder is available in decoders 231 - 234 which are shared resources of decoder unit 23, and decodes the packet data at a time at which any decoder becomes available, by using this decoder, for transmission to base station controller 12, so that the decoders can be efficiently utilized, an increased number of calls can be accommodated, and the throughput of the packet communication can be improved without increasing the number of decoders in the CDMA mobile communications system having the diversity hand-over function.

## Claims

1. In a radio communications system having a diversity hand-over function, a radio base station apparatus for transmitting/receiving a signal to/from a mobile station over the air, said radio base station apparatus comprising:
a shared resource unit having a processing device, as shared resources, for processing a signal of each call; and
a buffer unit for sending a received signal to said processing device of said shared resource unit when the received signal is a signal of a call which is in a diversity hand-over state, such that the received signal can be transmitted at a predetermined time and for holding the received signal in a data buffer when the received signal is not a signal of a call which is in a diversity hand-over state, and for subsequently sending the received signal to said processing device at a time at which said processing device becomes available.

2. The radio base station apparatus according to claim 1, wherein said signal transmitted/received to/from said mobile station is packet data for a packet communication which allows a delay in the radio communications system.

3. The radio base station apparatus according to claim 1, wherein said received signal is a downlink signal received from a base station controller.

4. The radio base station apparatus according to claim 3, wherein said processing device of said shared resource unit is an encoder for encoding the downlink signal to be transmitted to said mobile station over the air in accordance with a predetermined coding scheme.

5. The radio base station apparatus according to claim 5, wherein said predetermined timing is specified by a frame number from said base station controller.

6. The radio base station apparatus according to claim 1, wherein said received signal is an uplink signal received from said mobile station.

7. The radio base station apparatus according to claim 6, wherein said processing device of said shared resource unit is a decoder for decoding the uplink signal received from said mobile station over the air in accordance with a predetermined coding scheme.

8. The radio base station apparatus according to claim 7, wherein said predetermined timing is determined such that a signal decoded by said decoder from the uplink signal received from said mobile station is received by said base station controller at the same time as the same signal that is received from said same mobile station and that is decoded by other radio base stations through diversity hand-over.

9. The radio base station apparatus according to claim 1, wherein said shared resource unit and buffer unit are provided for a downlink signal to be transmitted to said mobile station over the air, and are provided for an uplink signal received from said mobile station over the air, respectively.

10. The radio base station apparatus according to claim 9, wherein:
said shared resource unit for the downlink signal comprises an encoder, as said processing device, for encoding the downlink signal in accordance with a predetermined coding scheme,
said buffer unit for the downlink signal sends the received signal to said encoder of said shared resource unit for the downlink signal, when the received signal from said base station controller is a signal of a call which is in a diversity hand-over state, such that the received signal can be transmitted to said mobile station at a time specified by a frame number from said base station controller, and said buffer unit temporarily holds the received signal in the data buffer when the received signal is not a signal of a call in a diversity hand-over state, and subsequently sends the received signal to said encoder at a time at which said encoder becomes available,
said-shared resource unit for the uplink signal comprises a decoder, as said processing device, for decoding the uplink signal in accordance with a predetermined coding scheme, and
said buffer unit for the uplink signal sends the signal received from said mobile station to said decoder of said shared resource unit for the uplink signal, when the received signal from said mobile station is a call which is in a diversity hand-over state, such that the signal received from said mobile station and decoded by said decoder can be received by said base station controller at the same time as the same signals that are received from said same mobile station and that are decoded by other radio base stations through diversity hand-over, and said buffer unit holds the received signal in said data buffer, when the received signal is a signal of a call which is not in a diversity hand-over state, and subsequently sends the received signal to said decoder at a time at which said decoder becomes available.
